# EUROPEAN PATENT APPLICATION

(11) **EP 1 936 240 A1**
(43) Date of publication of application: **25.06.2008**
(21) Application number: 06026355.5
(22) Date of filing: 19.12.2006
(51) Int. Cl.: F16H 59/02, F16H 59/04

(54) **A gear shift system**

(71) Applicant: Kongsberg Automotive AS, 3601 Kongsberg (NO)
(72) Inventor: Melander, Ingemar, 56593 Mullsjö (SE)
(74) Representative: UEXKÜLL & STOLBERG

(57) **Abstract**

The invention relates to a gear shift system comprising a shift lever, a control mechanism for transferring commands from the shift lever to a gear box, said control mechanism including a first bar (11) and a second bar (12), a reaction rod (18) and a lever arm (15), an attachment body (13) connecting one end portion of the reaction rod (18) and one end portion of the lever arm (15) with the first bar (11), and another attachment body (14) connecting the other end portion of the reaction rod (18) and the other end portion of the lever arm (15) with the second bar (11) in order to transfer motion from said first bar (11) to said second bar (12), characterised in that at least one of said attachment bodies (13/14) is a tubular member.

## Description

The present invention refers to a gear shift system comprising a shift lever, a control mechanism for transferring commands from the shift lever to a gear box, said control mechanism including a first bar and a second bar, a reaction rod and a lever arm, an attachment body connecting one end portion of the reaction rod and one end portion of the lever arm with the first bar, and another attachment body connecting the other end portion of the reaction rod and the other end portion of the lever arm with the second bar in order to transfer motion from said first bar to said second bar.

Known mechanical systems use a rotation of a bar to transfer the gear select command and a longitudinal movement of this bar for the gear shift command. For example, US 6,951,151 describes such a mechanical system.

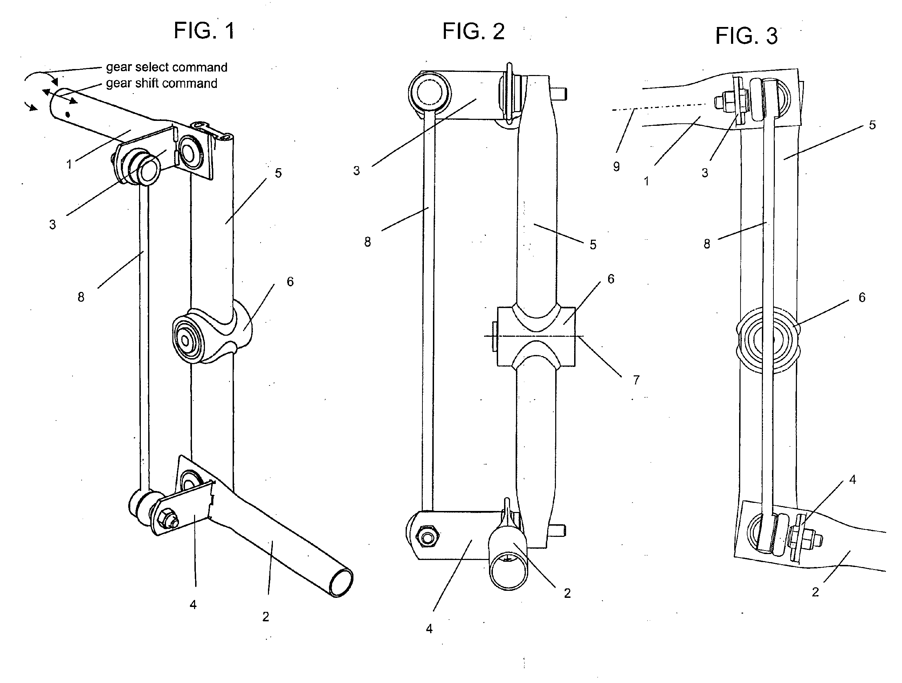

Also commonly used is a mechanical system as can be seen in Figures 1-3. For transferring the gear shift command from a first bar 1 to a second bar 2, a lever arm 5 is attached to both bars by a ball joint at each end and pivoted to the chassis (not shown) such that it can pivot around an axis 7 perpendicular to the plane spanned by the bars' and the lever arm's longitudinal axes. For transferring the gear select command to the second bar 2, attachment members 3 and 4 are fixed to the bars 1 and 2, respectively, extending both into the same direction perpendicular to the plane spanned by the bars' and the lever arm's longitudinal axes. At the end of each attachment member 3 and 4 a ball joint is attached receiving the spherically formed ends of a reaction rod 8 that is arranged in parallel to the lever arm 5 connecting the two attachment members 3 and 4. A rotation of the first bar is then transferred by a longitudinal movement of the reaction rod to the second bar.

Known designs of a mechanical system described. above suffer from being costly in space and production costs. This is mainly due to the attachment members attached to each bar. These attachment members are commonly produced by pressing and fixed to the bars by welding. The need for many different variations of the mechanical system corresponding to the different manufacturers and models of vehicles, requires a costly production of different lengths of the attachment members with a variety of different tools.

The object of the present invention is to achieve a less costly and more space saving attachment body for the reaction rod in a system for gear shifting.

According to the present invention the attachment body of the reaction rod in a system for gear shifting is a tubular member. The term tubular member means here a linear work piece having a longitudinal axis and an essentially constant cross-sectional shape along the length of the work piece. However, during subsequent processing before installation the tubular member may be milled, bevelled or tapered such that the attachment body may have surface features. In general, the system for gear shifting comprises two bars each with an attachment body fixed to it. Preferably, the attachment bodies are identical and the following description of the attachment body fixed to the first bar applies symmetrically for a second identical attachment body fixed to the second bar.

Each end of the reaction rod is attached to a spherical plain bearing added to the attachment body that has an end portion fixed to the bar. In analogy to the reaction rod, the lever arm is attached to another spherical plain bearing in the attachment body. In each attachment body the spherical bearings have a common axis.

Preferably, the attachment body is a hollow cylindrical work piece that can be cut into appropriate lengths and secured to the bar by a bolt, a nut or a welding.

The present invention achieves the goal of a less costly and more space saving attachment body, because the tubular member can be cut into appropriate lengths with less complexity compared to the pressed attachment members known from prior art. The in-line placement of the reaction rod's and the lever arm's attachments saves space significantly.

The present invention will now be described in more detail with references to the accompanying drawings, in which:
Figure 1 is a perspective view of a rod linkage system for shifting of gears in neutral gear position according to the prior art.
Figure 2 is a front view of the rod linkage system in neutral gear position according to the prior art.
Figure 3 is a side view of the rod linkage system in neutral gear position according to the prior art.
Figure 4 is a perspective view of the rod linkage system in neutral gear position according to a preferred embodiment of the present invention.
Figure 5 is a front view of the rod linkage system according to a preferred embodiment of the present invention.
Figure 6 is a side view of the rod linkage system according to a preferred embodiment of the present invention.
Figure 7 is a horizontal cut through the plane spanned by the first bar's and the attachment body's longitudinal central axes displaying a preferred embodiment of the present invention.

The function of the rod linkage system to transfer rotational and longitudinal movement of a first bar 1 to a second bar 2 according to the prior art becomes clear from figures 1-3. The gear select command is expressed in a rotational movement of the first bar 1. The first bar 1 is attached to the lever arm 5 by means of a spherical bearing that allows for a rotational movement of the first bar 1 without pivoting the lever arm 5 around the bar's longitudinal axis 9. The lever arm 5 is attached to the chassis by means of a pivot bearing 6 at a middle position with respect to the longitudinal axis of the lever arm 5 allowing for a pivotal movement around an axis 7 perpendicular to the plane spanned by the bar's and the lever arm's longitudinal axes. An attachment member 3 is fixed to the first bar 1 near the attachment of the lever arm 5. At the end of the attachment member 3 a reaction rod 8 in parallel to the lever arm 5 is attached to the attachment member 3 by means of another spherical bearing that allows for a pivotal movement of the attachment member 3 around the bar's longitudinal axis 9 without pivoting the reaction rod 8. The rotational movement of the first bar 1 is transferred to a longitudinal movement of the reaction rod 8. At the bottom end of the lever arm 5 the attachment system comprising the second bar 2 and another attachment member 4 is constructed symmetrically with respect to the lever arm's pivot axis 7. The longitudinal movement of the reaction rod 8 is transferred to a rotational movement of the other bar 2.

The gear shift command is expressed in a longitudinal movement of the first bar resulting in a pivotal movement of the lever arm 5 around its pivot axis 7. The shift command is transferred by the pivotal movement of the lever arm 5 to the attachment member 4 resulting in a longitudinal movement of the second bar 2 which is inverted with respect to the longitudinal movement of the first bar 1.

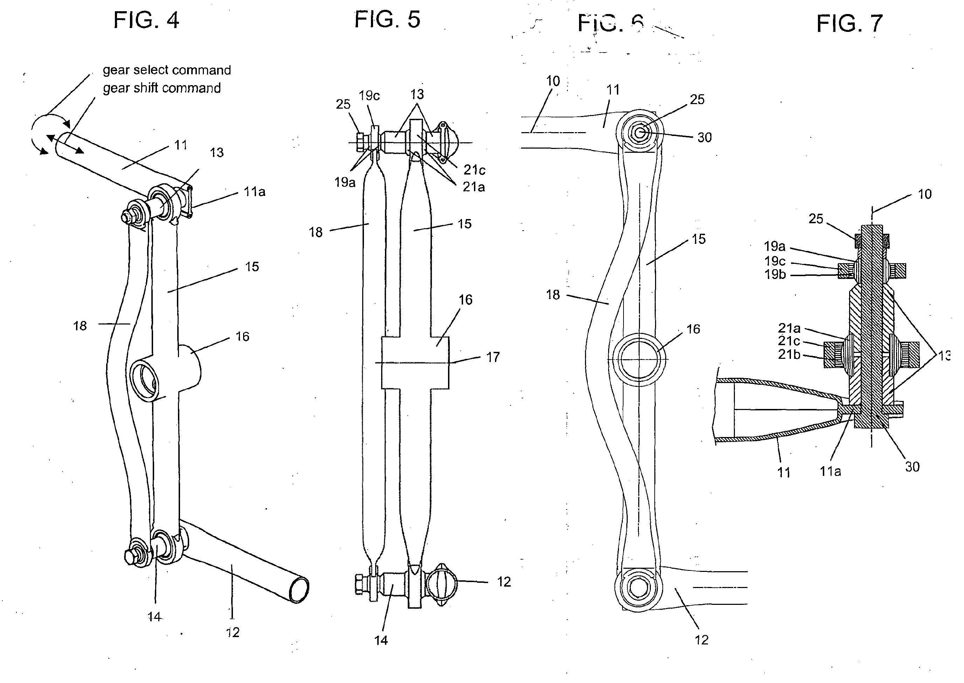

Figures 4-7 illustrate how a preferred embodiment of the invention achieves the transfer of the gear shift and select commands, wherein the end of an attachment body 13 in form of a hollow tubular member of cylindrical shape is fixed to the flat end piece 11a of a first bar 11 such that the longitudinal axes of the attachment body 13 and the first bar 11 are perpendicular to each other. At a distance of approximately a third of its length to the fixed end the attachment body is provided with a spherical plain bearing 21a that is received by the bearing housing 21b installed in the end piece 21c of the lever arm 15. The lever arm 15 extends vertically downwards where it is at approximately half length pivoted with a pivot bearing 16 to the chassis (not shown) such that it can pivot around an axis 17 perpendicular to the plane spanned by the bars' and the lever arm's longitudinal axes. In parallel to the lever arm 15 a reaction rod 18 is attached to the attachment body by means of another spherical plain bearing 19a that is mounted on the attachment body 13 near or at the end such that the attachment body 13 can pivot around the longitudinal axis 10 of the first bar 11. In analogy to the attachment of the lever arm 15, the end piece 19c of the reaction rod 18 encloses a bearing housing 19b that receives the other spherical bearing 19a. The lower ends of the lever arm 15 and the reaction rod 18 are attached symmetrically to the second bar 12 with respect to the pivot axis 7 by means of another attachment body 14 identical to the first one. As can be seen in Figure 6, the reaction rod 18 is preferably bent in the plane spanned by the bars' and the lever arm's longitudinal axes. Thus, the reaction rod 18 does not interfere with the pivotal bearing 16 of the lever arm 15 during movement.

Figure 7 displays a cross sectional top view through a preferred embodiment of the invented attachment system. The fixation of the hollow attachment body 13 to the first bar 11 is realised by a bolt 30 inserted through a bore in the flat end piece 11a of the first bar 11 into the inner cavity of the hollow attachment body 13. The bolt 30 is longer than the attachment body 13 such that it protrudes with a tapped portion and is secured by tightening a nut 25.

## Claims

1. A gear shift system comprising a shift lever, a control mechanism for transferring commands from the shift lever to a gear box, said control mechanism including a first bar (11) and a second bar (12), a reaction rod (18) and a lever arm (15), an attachment body (13) connecting one end portion of the reaction rod (18) and one end portion of the lever arm (15) with the first bar (11), and another attachment body (14) connecting the other end portion of the reaction rod (18) and the other end portion of the lever arm (15) with the second bar (11) in order to transfer motion from said first bar (11) to said second bar (12),
**characterised in that** at least one of said attachment bodies (13/14) is a tubular member.

2. A gear shift system according to claim 1, wherein the tubular member (13/14) is made from a cylindrical work piece cut to appropriate length.

3. A gear shift system according to any of the preceding claims, wherein the tubular member (13/14) has a circular cross section.

4. A gear shift system according to any of the preceding claims, wherein the position of the tubular member (13/14) perpendicular to the lever arm (15) and the first bar (11) and the second bar (12), respectively, refers to the neutral gear position.

5. A gear shift system according to any of the preceding claims, wherein the lever arm (15) attachment is placed between the attachment of the reaction rod (18) and the attachment of the first bar (11) and the second bar (12), respectively.

6. A gear shift system according to any of the preceding claims, wherein the tubular member (13/14) is hollow.

7. A gear shift system according to any of the preceding claims, wherein the tubular member (13/14) is secured with a bolt (30) to the first bar (11) or the second bar (12), respectively.

8. A gear shift system according to claim 8, where the bolt (30) protrudes the tubular member (13/14) at both ends.

9. A gear shift system according to any of the preceding claims, wherein the reaction rod (18) is attached to the tubular member (13/14) by a spherical bearing.

10. A gear shift system according to any of the preceding claims, wherein the joint for the attachment of the reaction rod (18) and the joint for the attachment of the lever arm (15) are placed in-line along the longitudinal axis of the tubular member (13/14).
